# EUROPEAN PATENT SPECIFICATION

(11) **EP 2 843 222 B1**
(45) Date of publication and mention of the grant of the patent: **29.07.2020**
(21) Application number: 12875457.9
(22) Date of filing: 23.04.2012
(51) Int. Cl.: F02G 5/02, F01K 9/00, F01K 13/02, F01K 23/06, F28F 27/02

(54) **HEAT TRANSPORT DEVICE**
WÄRMETRANSPORTVORRICHTUNG
DISPOSITIF DE TRANSFERT DE CHALEUR

(43) Date of publication of application: 04.03.2015
(73) Proprietor: Toyota Jidosha Kabushiki Kaisha, Toyota-shi, Aichi 471-8571 (JP)
(72) Inventor: HOTTA, Takashi, Toyota-shi Aichi 471-8571 (JP); YAMADA, Kenichi, Toyota-shi Aichi 471-8571 (JP); IWAKAWA, Takayuki, Toyota-shi Aichi 471-8571 (JP)
(74) Representative: J A Kemp LLP
(86) International application number: PCT/JP2012/060885
(87) International publication number: WO 2013/160993

(56) References cited:
- EP-A1- 2 280 152
- WO-A1-2009/107383
- JP-A- H07 158 996
- JP-A- H11 148 311
- JP-A- 2003 041 905
- JP-A- 2009 052 405
- JP-U- H0 294 302
- JP-U- H0 743 801
- JP-U- S61 120 027
- US-A1- 2010 287 920

## Description

### TECHNICAL FIELD

The present invention relates to heat transport devices.

### BACKGROUND ART

As a heat transport device, there is known a vapor loop structure in which a heat transport medium circulates naturally while a sequence of receiving heat in a condensed state and radiating heat in a vaporized state is repeatedly carried out. In this regard, an engine waste heat utilization device that utilizes waste heat of an engine is disclosed in Patent Document 1 as an art of recovering and utilizing heat by such a vapor loop structure.

Besides, arts that are considered as being relative to the present invention are disclosed in Patent Documents 2 through 5. In Patent Document 2, there is disclosed a waste heat recovery device in which, when an engine provided with a Rankine cycle is stopped, negative pressure in a system due to condensation of vapor in cooling is reduced and breakage of a pipe or the like is avoided. In Patent Document 3, disclosed is an internal combustion engine provided with a heat recovery device in which a coolant vapor in an engine cooling system is heated by engine exhaust and a turbine is thus driven. In paragraph 0037 of the specification of Patent Document 3, there is a disclosure that the inside of a cooling path is evacuated when the engine is stopped and air may be sucked therein from the outside and that a vacuum pump is provided to remove air in the cooling path.

In Patent Document 4, there is disclosed a warm-up apparatus for internal combustion engines provided with a waste heat recovery device having a loop type heat pipe structure, which is a kind of the vapor loop structure. In paragraph 0055 of the specification of Patent Document 4, there is a disclosure that the inside of the waste heat recovery device of the loop type heat pipe structure is set in the vacuum state. In Patent Document 5, disclosed is a vehicle cooling apparatus capable of venting air from a cooling water path.

### PRIOR ART DOCUMENTS

### PATENT DOCUMENTS

Patent Document 1: Japanese Patent Application Publication No. 2010-156315
Patent Document 2: Japanese Patent Application Publication No. 2008-185001
Patent Document 3: Japanese Patent Application Publication No. 2000-345835
Patent Document 4: Japanese Patent Application Publication No. 2010-281236
Patent Document 5: Japanese Patent Application Publication No. 2008-121434
   JP H11 148311 A aims to adjust vacuum degree in a condenser during discharge of noncondensable gas generated in the condenser by providing a circulation system for circulating the noncondensable gas from the outlet side of an ejector to its inlet side in a device which sucks the noncondensable gas by the ejector and releases it to atmosphere. In starting a steam turbine, a valve is opened and a vacuum pump is driven to keep inner pressure of a condenser in a vacuum condition. When turbine load operation is started, the valve is closed, and noncondensable gas generated in the condenser is sucked by an ejector using atmosphere sucked from an atmosphere suction system as suction driving force, and is released through a vacuum pump. At this time, a pressure controller devices valve opening/closing signals based on the deviation between the inner pressure detected by a pressure gauge and a pressure and supplies them to an adjusting valve, suction driving force of the ejector is increased by returning a part of the noncondensable gas through a circulation system to the inlet side of the ejector, and degree of vacuum in the condenser is adjusted.
   US 2010/6287920 describes a device for controlling the working fluid circulating in a closed circuit operating according to a Rankine cycle, said circuit comprising a heat exchanger for evaporation of said fluid, swept by a hot fluid from a hot source, expansion means for expanding the fluid in vapour form, a cooling exchanger swept by a cold fluid for condensation of the fluid in vapour form, and a circulation and compression pump for the fluid in liquid form. The device comprises means of managing the mass of fluid contained in circuit.

### SUMMARY OF THE INVENTION

### PROBLEMS TO BE SOLVED BY THE INVENTION

In the heat transport device, there is a possibility that air is sucked in a circulation path unit in the vacuum state from the outside. If the air suction takes place, air exists instead of heat transport medium and the amount of receiving heat and the amount of radiating heat decrease correspondingly, so that the device performance may deteriorate.

In this regard, specifically, there is an exemplary heat transport device equipped with the above-described vapor loop structure. In this heat transport device, the heat transport medium is vaporized in a heat recovery unit that receives heat and moves diffusely to finally reach a condensation unit that radiates heat. Thus, if the air suction takes place in the heat transport device, the movement of the heat transport medium is impeded greatly. Thus, heat is not transported at all or the heat transport performance deteriorates considerably, so that the device performance may deteriorate greatly.

It can be said that the air suction is not concerned particularly if the inside of the circulation path unit is hermetically sealed for example. However, it is difficult to hermetically seal the inside of the circulation path unit and is not always realistic. Therefore, it is generally conceivable that various types of seal members, for example, are used to improve the hermetic seal of the inside of the circulation path unit. However, in this case, there is a possibility that more or less air suction takes place and air may be gradually accumulated in the circulation path unit. Further, in that case, the seal member has age deterioration, which makes it difficult to maintain the highly hermetic seal for a long time and to thus suppress the air suction itself.

For the above reasons, a realistic way to cope with the device performance deterioration should be considered on the assumption that the air suction takes place. For this purpose, as disclosed in Patent Document 3, for example, it is conceivable that the vacuum pump is used to remove air from the circulation path unit. However, this case may be disadvantageous in terms of cost and downsizing, for example.

The present invention aims to provide a heat transport device that has an advantageous structure in terms of, for example, cost and is capable of recovering the device performance that deteriorates due to air suction.

### MEANS FOR SOLVING THE PROBLEMS

According to the present invention there is provided a heat transport device as defined in appended claim 1.

The present invention may be configured so that the heat transport device further comprises a reserve tank that stores, in a liquid phase, heat transport medium with which the circulation path unit is to be replenished , the branch path unit being connected to the reserve tank so as to have an opening located in a position lower than a height of a liquid level that is to be at least ensured in the serve tank; and wherein the heat transport device further comprises a replenishment quantity calculation unit that calculates a quantity of heat transport medium with which the circulation path unit should be replenished from the reserve tank, and a second control unit configured to open and close the valve in accordance with the quantity of heat transport medium calculated by the replenishment quantity calculation unit in a state in which the pressure in the circulation path unit is lower than the predetermined pressure after the first control unit opens and closes the valve.

The present invention may be configured to further comprise a freezing determination unit that determines whether the heat transport medium circulating in the circulation path unit has a possibility of freezing; and a reduction-in-quantity correction unit that performs a reduction-in-quantity correction in which the quantity of heat transport medium is reduced when an operation start condition is met from an operation stop state if the freezing determination unit determines that the heat transport medium that circulates in the circulation path unit has a possibility of freezing.

The present invention may be configured so that wherein the heat transport medium naturally circulates in the circulation path unit while a sequence of receiving heat in a condensed state in the heat recovery unit and radiating heat in a vaporized state in the condensation unit is repeatedly carried out.

The present invention may be configured so that the heat transport unit is mounted in a vehicle with an internal combustion engine, and the heat recovery unit recovers exhaust heat of the internal combustion engine.

### EFFECTS OF THE INVENTION

According to the present invention, it is possible to recover the device performance that deteriorates due to air suction with an advantageous structure in terms of cost, for example.

### BRIEF DESCRIPTION OF THE DRAWINGS

FIG. 1 is a diagram of a schematic structure of a heat transport device;
FIG. 2 is a flowchart of an exemplary control in accordance with a first embodiment;
FIG. 3 is a flowchart of an exemplary control in accordance with a second embodiment;
FIG. 4 is a flowchart of an exemplary control in accordance with a third embodiment;
FIG. 5 is a flowchart of an exemplary control in accordance with a fifth embodiment; and
FIG. 6 is a flowchart of an exemplary control in accordance with a sixth embodiment.

### EMBODIMENTS FOR CARRYING OUT THE INVENTION

A description will now be given of embodiments for carrying out the invention with reference to the accompanying drawings.

### First Embodiment

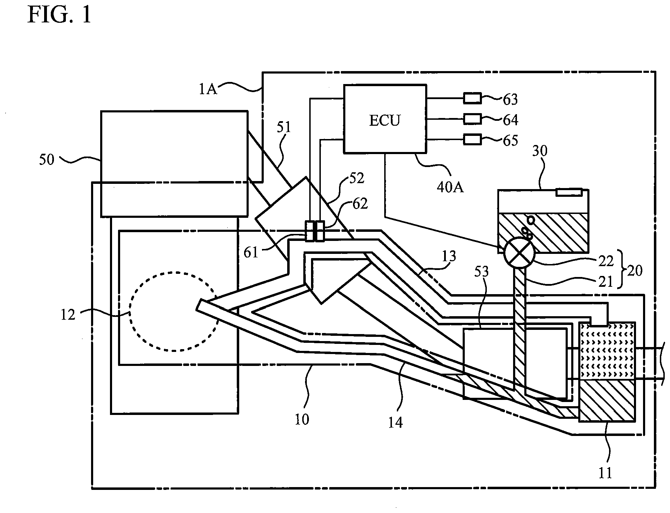

FIG. 1 is a diagram of a schematic structure of a heat transport device 1A. In FIG. 1, there are illustrated, together with the heat transport device 1A, an internal combustion engine 50, an exhaust pipe 51, a starter converter 52 and an underfloor converter 53. The structural parts illustrated in FIG. 1 are mounted in a vehicle. The heat transport device 1A is provided with a circulation path unit 10, a branch path unit 20, a reserve tank 30, and an ECU 40A. The heat transport device 1A carries out a heat transport with a heat transport medium utilizing a phenomenon such that vaporization occurs due to heat reception and condensation occurs due to heat radiation (hereinafter referred to simply as transport medium).

The circulation path unit 10 is provided with a heat recovery unit 11, a condensation unit 12, a feed pipe 13, and a return pipe 14. The circulation path unit 10 with those structural parts forms a circulation path in which the heat recovery unit 11 and the condensation unit 12 are incorporated. The circulation path unit 10 is beforehand filled with the transport medium in a depressurized state below the atmospheric pressure (for example, -100 kPa). By this, the boiling point of the transport medium is adjusted to match the operating environment in the heat transport by the transport medium. In this regard, specifically, the transport medium is H₂O in the present embodiment.

The heat recovery unit 11 is a heat exchanger and vaporizes the transport medium. In the present embodiment, the heat recovery unit 11 is specifically a heat exchanger that performs a heat exchange between the exhaust of the internal combustion engine 50 and the transport medium and thus recovers heat from the exhaust to vaporize the transport medium. In this regard, the start of the internal combustion engine 50 is a condition for starting the operation of the heat transport device 1A, and the stop of the internal combustion engine 50 is a condition for stopping the operation of the heat transport device 1A. The cooling progresses after the condition for stopping the operation is met and thus the condensation of the transport medium progresses, whereby the circulation path unit 10 has the vacuum state.

The exhaust of the internal combustion engine 50 is cleaned by the starter converter 52 and the underfloor converter 53 provided in the exhaust pipe 51, and is expelled from the exhaust pipe 51. The heat recovery unit 11 is provided specifically in a part of the exhaust pipe 51 that is downstream from the underfloor converter 53.

The condensation unit 12 is a unit in which vapor, which is the vaporized transport medium, is condensed, and utilizes heat transported by vapor. In the present embodiment, specifically, the condensation unit 12 is a part of the internal combustion engine 50 that utilizes heat transported by the vapor for warming up. Thus, the heat transport device 1A is provided with the condensation unit 12 so as to be shared with the internal combustion engine 50. The condensation unit 12 may be a specific part of the internal combustion engine 50 capable of reducing, by heat transported by the vapor, the friction torque of the internal combustion engine 50 during cold conditions. Specifically, the condensation unit 12 may be a bearing unit that supports a crankshaft of the internal combustion engine 50.

The feed pipe 13 feeds vapor to the condensation unit 12 from the heat recovery unit 11. The feed pipe 13 is provided with a pressure sensor 61 and a temperature sensor 62. The pressure sensor 61 senses pressure in the circulation path unit 10 by sensing pressure in the feed pipe 13 (hereinafter referred to as system internal pressure). The temperature sensor 62 senses the temperature in the circulation path unit 10 by sensing the temperature in the feed pipe 13 (hereinafter referred to as system internal temperatures).

In this regard, the pressure sensor 61 is provided in a part of the circulation path unit 10 having the highest position. The temperature sensor 62 is provided so as to sense the temperature of the part of the circulation path unit 10 in which the pressure sensor 61 senses the system internal pressure. The return pipe 14 returns the condensed transport medium to the heat recovery unit 11 from the condensation unit 12. Specifically, the return pipe 14 is provided so as to return the condensed transport medium to the heat recovery unit 11 from the condensation unit 12 due to the function of gravity together with the heat recovery unit 11.

The branch path unit 20 is provided with a branch pipe 21 and a valve 22. The branch path unit 20 with the above structural parts forms a branch path in which the valve 22 is incorporated. The branch pipe 21 branches from the circulation path unit 10. The valve 22 controls the flow in the branch pipe 21. Specifically, the valve 22 is a flow-rate adjustment valve. The valve 22 may be an open/close valve, for example. The branch pipe 21 is connected to the reserve tank 30 via the valve 22. The reserve tank 30 stores, in the liquid phase, the transport medium with which the circulation path unit 10 is replenished.

In this regard, specifically, the branch pipe 21 is connected to a bottom portion of the reserve tank 30 via the valve 22 from beneath it. The branch pipe 21 has an opening located in a position lower than a height of the liquid level that is to be at least ensured in the reserve tank 30. More specifically, the branch pipe 21 connected to the reserve tank 30 is provided as follows. That is, the branch pipe 21 is provided so as to branch and extend from the return pipe 14 upwards in the direction of gravity. The branch pipe 21 is provided so as to branch from a part of the return pipe 14 closer to the heat recovery unit 11.

The reserve tank 30 is specifically a type of tank that is open to the atmosphere in which atmospheric pressure is exerted on the transport medium stored in the liquid phase. The reserve tank 30 has a capacity that enables the transport medium circulating in the circulation path unit 10 to be stored in the liquid phase in addition to the transport medium stored in the liquid phase. For example, the reserve tank 30 may be a tank with a breather valve that opens with a given pressure and thus suppresses increase in the internal pressure.

The ECU 40A is an electronic control device, to which electrically connected are sensors and switches including the pressure sensor 61, the temperature sensor 62, an atmospheric pressure sensor 63 that senses atmospheric pressure, an atmospheric temperature sensor 64 that senses atmospheric temperature, and a group of sensors 65. The valve 22 is electrically connected as a control object.

The sensor group 65 includes a crank angle sensor capable of detecting an engine speed NE of the internal combustion engine 50, an airflow meter capable of measuring the quantity of intake air of the internal combustion engine 50, an acceleration position sensor that senses the degree of depression of an accelerator pedal, which makes a request the internal combustion engine 50 for acceleration, a water temperature sensor that senses the temperature of cooling water of the internal combustion engine 50, an exhaust temperature sensor that senses the temperature of exhaust of the internal combustion engine 50, and an ignition switch for starting up the internal combustion engine 50. The outputs of the sensor group 65 and a variety of information based on the outputs of the sensor group 65 may be acquired by an ECU for controlling the internal combustion engine 50, for example. The ECU 40A may be an ECU for controlling the internal combustion engine 50.

In the ECU 40A, a CPU performs a process in accordance with a program stored in a ROM while using a temporary memory area in a RAM as necessary. This implements various functional parts such as a first control unit described below.

A first control unit opens and closes the valve 22 in a state in which the system internal pressure is higher than a predetermined pressure α in a case where it is recognized that there is an increase in the system internal pressure in the circulation path unit 10 under the same operating conditions. The operating conditions are, for example, the quantity of the transport medium in the circulation path unit 10, the atmospheric temperature, the thermal state of the heat recovery unit 11, and the thermal state of the condensation unit 12. Specifically, the case where it is recognized that there is an increase in the system internal pressure in the circulation path unit 10 under the same operating conditions is a case where it is detected or estimated that the circulation path part 10 sucks air. That is, in this case, under the same operating conditions, the system internal pressure increases due to air suction, as compared with a case where no air is sucked.

Thus, the ECU further implements a suction determination unit that determines whether the circulation path unit 10 has sucked air. Therefore, specifically, if the suction determination unit determines that the circulation path unit 10 has sucked air, the first control unit opens and closes the valve 22 in a state in which the system internal pressure is higher than the predetermined pressure α.

The predetermined pressure α may be exerted on the valve 22 in the closed state from the side of the reserve tank 30 to which the branch path unit 20 is connected. The above pressure may be detected by a pressure sensor, for example. In the present embodiment, the reserve tank is a type of tank that is open to the atmosphere. The liquid pressure of the transport medium stored in the reserve tank 30 in the liquid phase is negligibly small as compared with the atmospheric pressure. Thus, in the present embodiment, the predetermined pressure α is the atmospheric pressure. In this regard, the setting of the predetermined pressure α to the atmospheric pressure includes a case where pressure is exerted on the valve 22 in the closed state from the side of the reserve tank 30.

In the present embodiment, specifically, the state in which the system internal pressure is higher than the predetermined pressure α corresponds to an exemplary case where the system internal pressure is higher than a predetermined pressure β. The predetermined pressure β may be set higher than the predetermined pressure α. Specifically, the first control unit may open or close the valve 22 before the operation stop condition is met (during operation of the internal combustion engine 50) after the operation start condition is met.

Specifically, the suction determination unit acquires the system internal pressure and the system internal temperature, and calculates a saturated vapor pressure corresponding to the system internal temperature. Then, the suction determination unit calculates the difference between the calculated saturated vapor pressure and the acquired system internal pressure, and determines that air has been sucked when the difference thus calculated is larger than a predetermined value. The system internal pressure may be obtained on the basis of the output of the pressure sensor 61, and the system internal temperature may be obtained on the basis of the output of the temperature sensor 62. The system internal pressure and the system internal temperature may be obtained by estimation, for example.

The heat transport device 1A thus structured transports heat so that the transport medium circulates naturally while the sequence of receiving heat in the condensed state in the heat recovery unit 11 and radiating heat in the vaporized state in the condensation unit 12 is repeatedly carried out. Thus, heat is recovered and utilized.

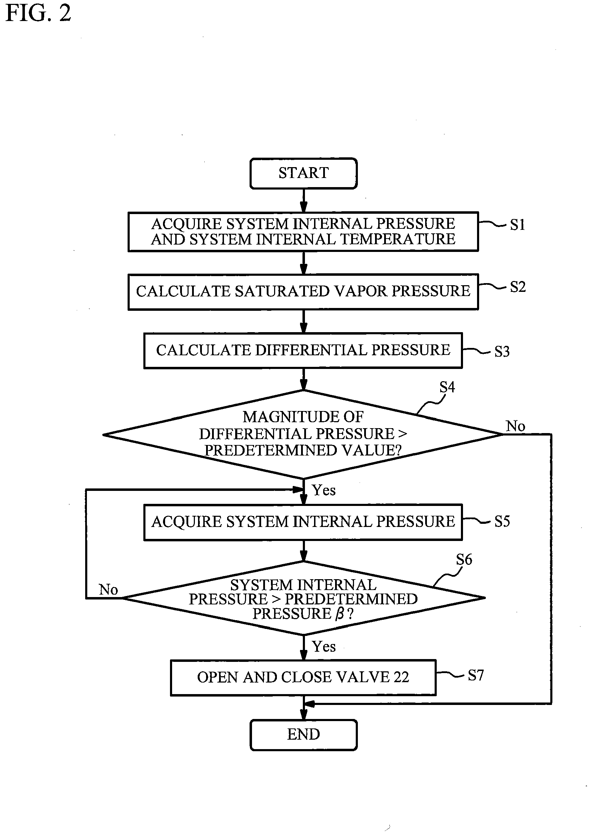

Next, a description is given of an exemplary control operation of the ECU 40A with reference to a flowchart of FIG. 2. The present flow may be performed during operation of the internal combustion engine 50, for example. The present flow may be performed while the internal combustion engine 50 is stopped. The ECU 40A acquires the system internal pressure and the system internal temperature (step S1). Next, the ECU 40A calculates the saturated vapor pressure corresponding to the acquired system internal temperature (step S2). Then, the ECU 40A calculates the difference between the calculated saturated vapor pressure and the acquired system internal pressure (step S3), and determines whether the magnitude of the difference thus calculated is larger than a predetermined value (step S4). If a negative determination is made, the flowchart is once ended.

If an affirmative determination is made in step S4, the ECU 40A acquires the system internal pressure (step S5), and determines whether the acquired system internal pressure is higher than the predetermined pressure β (step S6). In this regard, the system internal pressure rises as the heat reception of the transport medium in the heat recovery unit 11 progresses, and exceeds the predetermined pressure α and further the predetermined pressure β. Thus, in step S6, an affirmative determination is made at the timing of performance of the present flowchart, which timing may be a timing after the internal combustion engine 50 is started under cold conditions, a timing after a certain period of time passes and then the internal combustion engine 50 is stopped, or a timing before a certain period of time passes.

If a negative determination is made in step S6, the ECU 40A returns to step S5. In contrast, if an affirmative determination is made in step S6, it is determined that the circulation path unit 10 has sucked air. Thus, in this case, the ECU 40A opens and closes the valve 22 (step S7). For example, the valve 22 may be opened until the system internal pressure becomes lower than the given pressure higher than the predetermined pressure α. As another way, the period of opening the valve 22 and the degree thereof may be predetermined on the basis of the differential pressure between the predetermined pressures α and β. After step S7, the flowchart is once ended.

A description is now given of functions and effects of the heat transport device 1A. When it is recognized that an increase in the system internal pressure occurs under the same operating conditions, the valve 22 is opened and closed with the system internal pressure being higher than the predetermined pressure α. Thus, air is expelled from the circulation path unit 10 together with vapor while the condensed transport medium remains in the circulation path unit 10, whereby the device performance can be recovered in terms of the performance of transporting heat.

In this regard, after air is expelled from the circulation path unit 10 together with vapor, the amount of the transport medium in the circulation path unit 10 decreases. The system internal pressure decreases as the cooling of the circulation path unit 10 progresses after the operation stop condition is met, for example. When the system internal pressure becomes lower than the atmospheric pressure, it becomes possible to replenish the circulation path unit 10 with the transport medium.

Therefore, the performance of the heat transport device 1A may be recovered in terms of the transport amount by the time when the next operation start condition is met after the operation stop condition is met. The heat transport device 1A capable of recovering the device performance that deteriorates due to the air suction may have a structure that has an advantage in terms of cost because the vacuum pump is no longer needed, for example. The omission of the vacuum pump is advantageous in terms of downsizing the structure.

Specifically, the heat transport device 1A opens and closes the valve 22 in the state in which the system internal pressure is higher than the predetermined pressure α, when determining that the circulation path unit 10 has sucked air. In this regard, the heat transport device 1A may be configured so that only the system internal pressure is used to determine whether the circulation path unit 10 has sucked air instead of both the system internal pressure and the system internal temperature.

However, in terms of the detection accuracy in this case, it is realistic to understand a standard system internal pressure for comparison when the operating conditions are stabilized (for example, when a certain period has elapsed after the internal combustion engine 50 is stopped). Therefore, the occasion for detecting the air suction may be limited.

In contrast, the heat transport device 1A acquires the system internal pressure and the system internal temperature, and calculates the saturated vapor pressure corresponding to the system internal temperature. The heat transport device 1A calculates the difference between the calculated saturated vapor pressure and the acquired system internal pressure, and determines that the circulation path unit 10 has sucked air when the difference thus calculated is larger than the predetermined value. Therefore, the heat transport device 1A is capable of detecting the air suction regardless of the operating state of the heat transport device 1A. As a result, it is additionally possible to quickly detect the suction of air.

In the heat transport, the heat transport device 1A transports heat so that the transport medium circulates naturally while the sequence of receiving heat in the condensed state in the heat recovery unit 11 and radiating heat in the vaporized state in the condensation unit 12 is repeatedly carried out. The heat transport device 1A thus configured is capable of preventing the vapor from moving diffusely due to the air suction. Thus, the heat transport device 1A thus configured has a possibility that the heat transport performance deteriorates greatly due to the air suction and the device performance thus deteriorates greatly. Thus, particularly, the heat transport device 1A thus configured is capable of suitably recovering the device performance.

In a vehicle with the internal combustion engine 50, the mounting of the heat transport device 1A makes it possible to recover and utilize the exhaust heat of the internal combustion engine 50. The vehicle has a limited space for mounting the heat transport device 1A. In the vehicle, an attempt to hermetically seal the circulation path unit 10 completely is not realistic when the possibility of the occurrence of age deterioration and cost are considered. Thus, the heat transport device 1A is suitable particularly for the case where the heat transport device 1A is mounted in the vehicle with the internal combustion engine 50 and the heat recovery unit 11 recovers the exhaust heat of the internal combustion engine 50. In this case, the recovery of the heat transport performance improves fuel efficiency due to improvements in the warm-up performance of the internal combustion engine 50.

The heat transport device 1A is provided with the reserve tank 30 to which the branch path unit 20 is connected. With this structure, there is no need to further provide a branch path unit for connecting the circulation path unit 10 and the reserve tank 30 together. The heat transport device 1A thus configured is advantageous in terms of cost and downsizing.

The connection destination of the branch path unit 20 may be the atmosphere. Even in this case, the device performance may be recovered by further providing a branch path unit similar to the branch path unit 20 and connecting the branch path unit to the reserve tank 30. In this case, the branch path unit 20 may be a first branch path unit, and the branch path unit configured to have the reserve tank 30 as the connection destination may be a second branch unit.

In the heat transport device 1A, the quantity of the transport medium with which the circulation path unit 10 is to be replenished may be calculated timely, and the replenishment with the transport medium may be performed timely. The heat transport device 1A may be provided with a replenishment quantity calculation unit and a second control unit, which will be described later in association with a third embodiment, in order to calculate the replenishment quantity and perform the replenishment with the transport medium. This may be applied to a heat transport device 1B, which will be described next.

### Second Embodiment

Heat transport device 1B of the present embodiment is substantially the same as the heat transport device 1A except that the heat transport device 1B is equipped with an ECU 40B instead of the ECU 40A. Therefore, the heat transport device 1B is omitted for convenience of illustration.

In the determination of whether the circulation path unit 10 has sucked air in the ECU 40B, the suction determination unit makes a determination as follows. That is, the suction determination unit of the ECU 40B determines that the circulation path unit 10 has sucked air when the magnitude of the difference between the real quantity of change of the system internal pressure corresponding to the quantity of heat recovered by the heat recovery unit 11 and a predicted quantity of change is larger than a predetermined value.

The quantity of heat recovered is the quantity of heat recovered by the heat recovery unit 11 during a predetermined recovery period. The quantity of heat recovered may be calculated (estimated) on the basis of the quantity and temperature of the exhaust output from the internal combustion engine 50 at that time. The recovery period may be defined as a period until a predetermined time passes after the operation start condition is met from the operation stop state (in the present embodiment, after the internal combustion engine 50 is started under cold conditions). Thus, the thermal states of the heat recovery unit 11 and the condensation unit 12 out of the operating conditions can be stabilized.

The real quantity of change may be calculated on the basis of the system internal pressure at the start of the recovery period and that at the end thereof. The predicted quantity of change may be preset in accordance with the quantity of heat recovered within a predicted range during the recovery period, for example. The predicted quantity of change may be corrected on the basis of the atmospheric temperature when the operation start condition is met, for example.

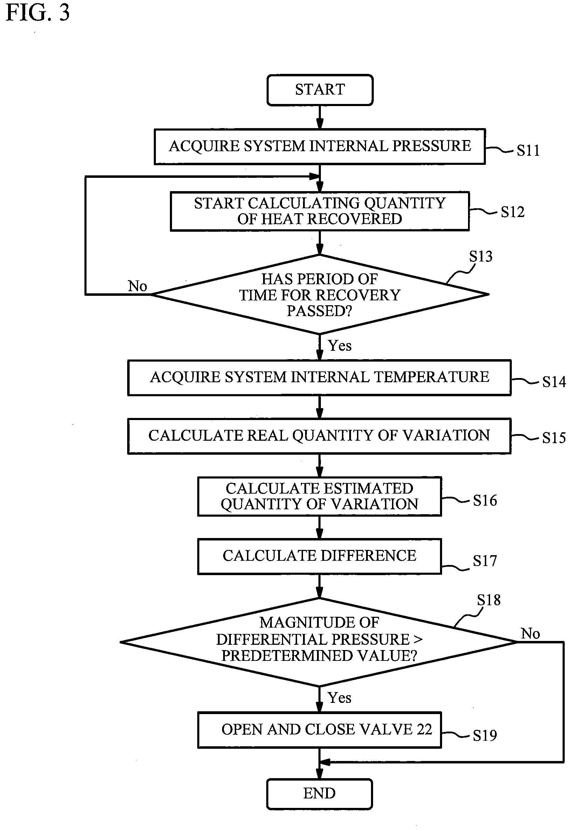

A description is now given of an exemplary control operation of the ECU 40B with reference to a flowchart of FIG. 3. The present flowchart may be started when the internal combustion engine 50 is started under cold conditions, for example. The ECU 40B acquires the system internal pressure (step S11). In step S11, the system internal pressure at the start of the recovery period is acquired. Next, the ECU 40B starts to calculate the quantity of heat recovered (step S12), and determines whether the recovery period has passed (step S13). If a negative determination is made, the ECU 40B returns to step S12. If an affirmative determination is made, the ECU 40B acquires the system internal pressure (step S14). In step S14, the system internal pressure at the end of the recovery period is acquired.

Then, the ECU 40B calculates the real quantity of change in the system internal pressure on the basis of the system internal pressure at the start of the recovery period and that at the end thereof (step S15). Subsequently, the ECU 40B acquires the predicted quantity of change corresponding to the calculated quantity of heat recovered (step SI6). Then, the ECU 40B calculates the difference between the real quantity of change and the predicted quantity of change (step S17), and determines whether the magnitude of the difference is larger than the predetermined value (step S18). If an affirmative determination is made, the ECU 40B opens and closes the valve 22 (step S19), and ends the flowchart. If a negative determination is made in step S18, the flowchart is ended.

A description is now given of functions and effects of the heat transport device 1B. In the aforementioned heat transport device 1A, air suction can be detected even when the thermal states of the heat recovery unit 11 and the condensation unit 12 change transiently. However, the detection accuracy may be degraded more greatly as the change is quicker. Further, in the heat transport device 1A, the system internal temperature may be estimated on the basis of the temperature of the cooling water of the internal combustion engine 50. However, in this case, there are some cases where the system internal temperature and the temperature of the cooling water do not have a high correlation between the system internal temperature and the temperature of the cooling water under a certain operating condition of the internal combustion engine 50. Thus, in such a case, the detection accuracy may be degraded.

In contrast, the heat transport device 1B determines that the circulation path unit 10 has sucked air when the magnitude of the difference between the real quantity of change in the system internal pressure corresponding to the quantity of heat recovered in the heat recovery unit 11 and the predicted quantity of change is larger than the predetermined value. Thus, the heat transport device 1A is capable of detecting the air suction in a situation having a difficulty in detecting the air suction with a high accuracy. In this regard, the heat transport device 1B is capable of suitably increasing the detection accuracy by providing it with the suction determination unit previously described in the first embodiment. In this case, the aforementioned suction determination unit of the first embodiment may be a first suction determination unit, and the suction determination unit may be a second suction determination unit.

### Third Embodiment

A heat transport device 1C of the present embodiment is substantially the same as the heat transport device 1A except that the heat transport device 1C is provided with an ECU 40C instead of the ECU 40A. The ECU 40C is substantially the same as the ECU 40A except the following. Therefore, the heat transport device 1C is omitted for convenience of illustration. A similar change may be applied to the heat transport device 1B.

In the ECU 40C, an replenishment quantity calculation unit and a second control unit are further implemented. The replenishment quantity calculation unit calculates the quantity of transport medium with which the circulation path unit 10 should be replenished from the reserve tank 30. The second control unit opens and closes the valve 22 in accordance with the quantity of transport medium for replenishment calculated by the replenishment quantity in a state in which the system internal pressure is lower than the predetermined pressure α after the first control unit opens and closes the valve 22. In the present embodiment, specifically, the state in which the system internal pressure is lower than the predetermined pressure α is a case where the system internal pressure is lower than a predetermined pressure γ. The predetermined pressure γ is lower than the predetermined pressure α.

The replenishment quantity calculation unit calculates the quantity of transport medium for replenishment that corresponds to the quantity of transport medium discharged when the first control unit opens and closes the valve 22 specifically in the case where the first control unit opens and closes the valve 22 before the operation stop condition is met after the operation start condition is met (in the embodiment, while the internal combustion engine 50 is operating). Specifically, the quantity of transport medium for replenishment may be calculated between the differential pressure between the system internal pressure and the predetermined pressure α and the opening period defined by opening and closing the valve 22 by the first control unit (in the present embodiment, further, in accordance with the degree of opening).

Specifically, the second control unit opens and closes the valve 22 in accordance with the quantity of transport medium for replenishment calculated by the replenishment quantity calculation unit in the state in which the system internal pressure is lower than the predetermined pressure α before the operation stop condition is met after the first control unit opens and closes the valve 22 before the above operation stop condition is met after the operation start condition is met.

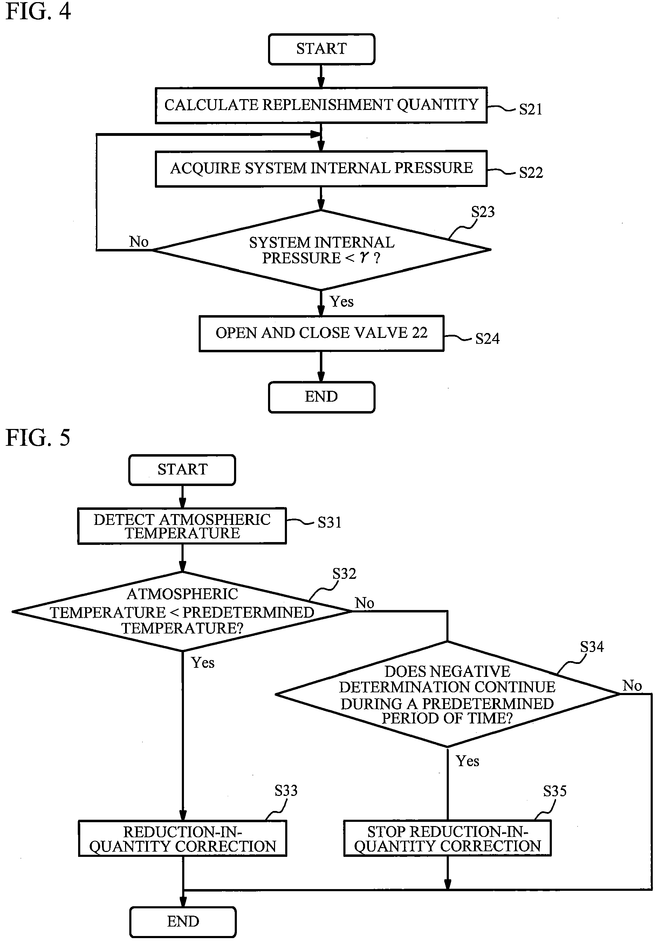

A description is now given of an exemplary control operation of the ECU 40C with reference to a flowchart of FIG. 4. When the flowchart of FIG. 2 is carried out while the internal combustion engine 50 is operating, the flowchart of FIG. 4 may be carried out subsequent to step S6 during operation of the internal combustion engine 50. The ECU 40C calculates the replenishment quantity (step S21). Next, the ECU 40C acquires the system internal pressure (step S22), and determines whether the acquired system internal pressure is lower than the predetermined pressure γ (step S23). If a negative determination is made, the ECU 40C returns to step S22. If an affirmative determination is made, the ECU 40C opens and closes the valve 22 in accordance with the replenishment quantity (step S24). After step S24, the flowchart is ended.

A description is now of functions and effects of the heat transport device 1C. The heat transport device 1C calculates the replenishment quantity, and opens and closes the valve in accordance with the calculated replenishment quantity in the state in which the system internal pressure becomes lower than the predetermined pressure α after the first control unit opens and closes the valve 22. It is thus possible to recover the device performance in terms of the amount of heat transported. That is, after air is expelled from the circulation path unit 10 together with the vapor, the device performance can be recovered in terms of the amount of heat transported as described above.

After the first control unit opens and closes the valve 22, the air that raises the system internal pressure is expelled and the quantity of transport medium in the circulation path unit 10 decreases. Thus, in this case, even before the operation stop condition is met, the system internal pressure may become lower than the predetermined pressure α under a certain heat reception condition in the heat recovery unit 11 and a certain heat radiation condition in the condensation unit 12.

In this regard, specifically, the first control unit opens and closes the valve 22 before the operation stop condition is met after the operation start condition is met, and then, the heat transport device 1C calculates the replenishment quantity in accordance with the quantity of transport medium that is discharged while the valve 22 is continuously open by the first control unit. Further, the heat transport device 1C opens and closes the valve 22 in accordance with the replenishment quantity calculated in the state in which the system internal pressure is lower than the predetermined pressure α until the operation stop condition is met. Thus, the heat transport device 1C is capable of quickly recovering the device performance in terms of the heat reception amount without waiting for the progress of cooling the circulation path unit 10 after the operation stop condition is met.

### Fourth Embodiment

A heat transport device 1D of the present embodiment is substantially the same as the heat transport device 1C except that the heat transport device 1D is provided with an ECU 40D. The ECU 40D is substantially the same as the ECU 40A except the following. Therefore, the heat transport device 1D is omitted for convenience of illustration. In the ECU 40D, a replenishment quantity calculation unit and a second control unit are implemented as follows.

That is, in the ECU 40D, specifically, the replenishment quantity calculation unit calculates a residual quantity of transport medium that remains in the circulation path unit 10 and the quantity of transport medium that is needed in the circulation path unit 10 when the operation start condition is met from the operation stop state. Specifically, the second control unit opens and closes the valve 22 in accordance with the replenishment quantity calculated by the replenishment quantity calculation unit in the state in which the system internal pressure is lower than the predetermined pressure α after the operation stop condition is met.

Specifically, the residual quantity of transport medium may be calculated. That is, the first step is to calculate an integrated discharged quantity of transport medium that is discharged from the circulation path unit 10 when the valve 22 opens and closes, and an integrated replenishment quantity of transport medium with which the circulation path unit 10 is replenished when the valve 22 is opened and closed. Then, the residual quantity may be calculated by subtracting the integrated discharged quantity from the quantity of transport medium that is beforehand input in the circulation path unit 10, and adding the integrated replenishment quantity to the resultant quantity of transport medium. It is possible to preset the quantity of transport medium that is needed in the circulation path unit 10 when the operation start condition is met from the operation stop state.

A control operation of the ECU 40D may be performed by starting a control operation similar to the flowchart depicted in FIG. 4 subsequent to step S6 after the internal combustion engine 50 is stopped in a case where the flowchart of FIG. 2 is performed while the internal combustion engine 50 is working, for example. Thus, a flowchart that describes the control operation of the ECU 40D is omitted for convenience of illustration. In the calculation of the replenishment quantity, the residual quantity may be timely calculated independently of the flowchart of FIG. 4. In this regard, the residual quantity is not limited to the time when the operation stop condition is met but may be calculated timely together with the residual quantity, for example.

A description is now given of functions and effects of the heat transport device 1D. The heat transport device 1D calculates the replenishment quantity as described above. The valve 22 is opened and closed in accordance with the calculated replenishment quantity as described above. It is thus possible to ensure an appropriate quantity of transport medium in the circulation path unit 10 after the operation stop condition is met in order to make ready for the next time when the operation start condition is met from the operation stop state. The device performance can be recovered as described above in terms of the transport amount.

### Fifth Embodiment

A heat transport device 1E of the present embodiment is substantially the same as the heat transport device 1A except that the heat transport device 1E is provided with an ECU 40E instead of the ECU 40A. The ECU 40E is substantially the same as the ECU 40A except the following. Therefore, the heat transport device 1E is omitted for convenience of illustration. A similar change may be applied to any of the heat transport devices 1B, 1C and 1D.

The ECU 40E further implements a freezing determination unit and a reduction-in-quantity correction unit. The freezing determination unit determines whether the transport medium that circulates through the circulation path unit 10 has a possibility of freezing. If the freezing determination unit determines whether the transport medium that circulates through the circulation path unit 10 has a possibility of freezing, the reduction-in-quantity correction unit corrects the quantity of transport medium needed in the circulation path unit 10 by reducing the same when the operation start condition is met from the operation stop state.

For example, the freezing determination unit is capable of determining, on the basis of the atmospheric temperature, whether the transport medium has a possibility of freezing. In this case, the freezing determination unit always detects or estimates the atmospheric temperature and determines that the transport medium has a possibility of freezing when the atmospheric temperature is lower than a predetermined temperature. The predetermined temperature may be equal to or higher than a temperature at which the transport medium in the circulation path unit 10 is frozen. The freezing determination unit may be configured not to always detect or estimate the atmospheric temperature. The freezing determination unit may be configured to have another appropriate method for determining whether the transport medium has a possibility of freezing.

Specifically, the reduction-in-quantity correction unit corrects the replenishment quantity by reducing the same. This makes a correction to reduce the quantity of transport medium needed in the circulation path unit 10 when the operation start condition is met from the operation stop state. The reduction in quantity for correction used at the time of reducing the quantity for correction may be preset. For example, the reduction-in-quantity correction unit may stop making a correction to reduce the quantity of transport medium when the freezing determination unit determines that there is no longer any possibility of freezing of the transport medium during a given period of time.

A description is now given of an exemplary control operation of the ECU 40E with reference to a flowchart of FIG. 5. The present flowchart indicates an exemplary case where the atmospheric temperature is always detected. The ECU 40E detects the atmospheric temperature (step S31), and determines whether the detected atmospheric temperature is lower than the predetermined temperature (step S32). If an affirmative determination is made, it is determined that the transport medium has a possibility of freezing. Thus, the ECU 40E reduces the replenishment quantity for correction (step S33).

In contrast, if a negative determination is made in step S32, it is determined that the transport medium does not have the possibility of freezing. In this case, the ECU 40E determines whether a determination of a zero possibility of freezing is always made for a predetermined period of time (the negative determination is continuously made in step S32 for the predetermined period of time) (step S34). If an affirmative determination is made, the ECU 40E stops reducing the replenishment quantity for correction (step S35). After step S33, the negative determination in step S34 or step S35, the present flowchart is once ended.

A description is now given of functions and effects of the heat transport device 1E. As described above, the heat transport device 1E determines whether the transport medium has a possibility of freezing and reduces the quantity for correction when it is determined that the transport medium has a possibility of freezing. It is thus possible to reduce the amount of heat that the transport medium receives in the circulation path unit 10 when the operation start condition is met from the operation stop state. As a result, it is possible to improve the operability from the low-temperature conditions.

The heat transport device 1E reduces the quantity of transport medium in the circulation path unit 10 in accordance with the reduction in quantity for correction, and is thus capable of preventing or suppressing freezing of the transport medium in the heat recovery unit 11 and outside of the periphery of the heat recovery unit 11. This makes it possible to prevent path blocking by freezing and to quickly change the frozen transport medium to the liquid phase, whereby the operability from the low-temperature conditions can be improved. Thus, the heat transport device 1E is capable of further improving the operability from the low-temperature conditions in recovery of the heat transport performance in terms of the transport amount.

### Sixth Embodiment

A heat transport device 1F of the present embodiment is substantially the same as the heat transport device 1E except that the heat transport device 1F is provided with an ECU 40F instead of the ECU 40E. The ECU 40F is substantially the same as the ECU 40A except the following. Therefore, the heat transport device 1E is omitted for convenience of illustration.

The ECU 40F further implements a third control unit. The third control unit opens and closes the valve 22 in a state in which the system internal pressure in the circulation path unit 10 does not exceed a predetermined pressure δ after the operation start condition is met. The predetermined pressure δ is a pressure that the system internal pressure should reach.

In this regard, specifically, the predetermined pressure δ may be a pressure that the system internal pressure should reach within a predetermined period of time after the operation start condition is met. In this case, the third control unit opens and closes the valves 22 when the system internal pressure is lower than the predetermined pressure δ when the predetermined period of time passes after the operation start condition is met, for example. The third control unit may open and close the valve 22 in accordance with the differential pressure between the system internal pressure available when the predetermined time passes and the predetermined pressure δ. Instead of the system internal pressure and the predetermined pressure δ, it is possible to use the amount of variation in the system internal pressure and the amount of variation when the system internal pressure changes to the pressure that the system internal pressure should reach.

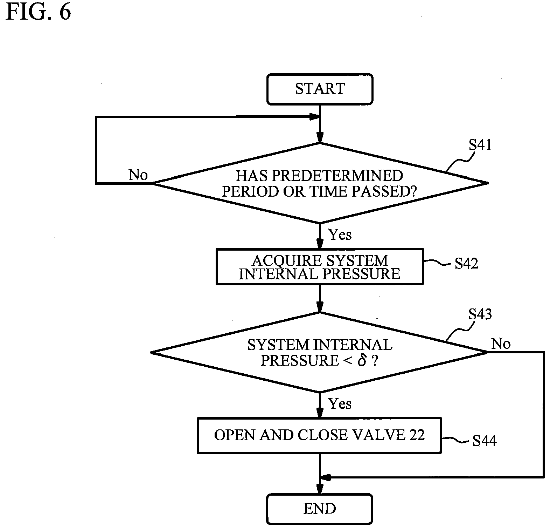

A description is now of an exemplary control operation of the ECU 40F with reference to a flowchart of FIG. 6. The present flowchart may be applied to cold starting of the internal combustion engine 50. The ECU 40F determines whether the predetermined time has passed after the internal combustion engine is started (step S41). If a negative determination is made, the ECU 40F acquires the system internal pressure (step S42), and determines whether the acquired system internal pressure is lower than the predetermined pressure δ (step S43). If a negative determination is made, the ECU 40F ends the flowchart. If an affirmative determination is made, the ECU 40F opens and closes the valve 22 (step S44). After step S44, the ECU 40F ends the flowchart.

A description is now given of functions and effects of the heat transport device 1F. In the heat transport device IF, when the quantity is decreased for correction, the quantity of transport medium in the circulation path unit 10 decreases. Thus, the quantity of transport medium may be short in view of the thermal conditions of the heat recovery unit 11 and the condensation unit 12 when some time passes after the operation start condition is met. Thus, the heat transport performance may be given insufficiently in terms of the transport amount.

In this case, the quantity of transport medium in the circulation path unit 10 decreases, and the system internal pressure decreases accordingly. With the above in mind, the heat transport device 1F opens and closes the valve 22 as described above to increase the amount of transport medium in the circulation path unit 10. It is thus possible to appropriately improve the heat transport performance that deteriorates because of the reduction in quantity for correction.

The quantity of transport medium of heat needed in the circulation path unit 10 when the operation start condition is met from the operation stop state may be increased after the operation start condition is met in terms of improvement in the operability. In this case, the quantity of transport medium may be preset to a reduced value as compared with the case with an increased quantity. A similar change may be applied to any of the heat transport devices 1A, 1B, 1C and 1D.

In this case, for example, the valve 22 is opened and closed in a state in which the system internal pressure is higher than the predetermined pressure α after the operation stop condition is met, whereby the quantity of transport medium in the circulation path unit 10 can be reduced again. This may be applied to the heat transport device 1F that increases the quantity of transport medium in the circulation path unit 10 if the correction directed to decreasing the quantity is not terminated.

Although some embodiments of the present invention have been described, the present invention is not limited to these embodiments, but various variations and changes may be made within the scope of the claimed invention.

For example, in the above-described embodiments, a description is given of the transport medium that is H₂O. However, the present invention is not limited to this, but an appropriate transport medium such as alcohol may be used. There is no need to put the transport medium into the circulation path unit under a depressed condition. Even in this case, cooling progresses when the operation stops, and the condensation of the transport medium progresses, whereby the inside of the circulation path unit is brought into the vacuum state and suction of air takes place. For example, the heat transport device may be a heat transport medium with a Rankine cycle.

### DESCRIPTION OF REFERENCE NUMERALS

| | |
|---|---|
| Heat transport device | 1A, 1B, 1C, 1D, 1E, 1F |
| Circulation path unit | 10 |
| Heat recovery unit | 11 |
| Condensation unit | 12 |
| Branch path unit | 20 |
| Valve | 22 |
| ECU | 40A, 40B, 40C, 40D, 40E, 40F |

## Claims

1. A heat transport device (1A) comprising:
a circulation path unit (10) in which a heat recovery unit (11) that vaporizing a heat transport medium and a condensation unit (12) that condenses the heat transport medium vaporized in the heat recovery unit (11) are incorporated, and which has a vacuum state;
a branch path unit (20) which branches from the circulation path unit (10), and in which a valve (22) capable of controlling flow is incorporated; and
a first control unit (40A) configured to open and close the valve (22) in a state in which pressure in the circulation path unit (10) is higher than a predetermined pressure (α) when it is detected or estimated that the circulation path unit (10) sucks air, **characterized in that**:
the heat transport device further comprises a reserve tank (30) that stores, in a liquid phase, heat transport medium with which the circulation path unit (10) is to be replenished, the branch path unit (20) being connected to the reserve tank (30) so as to have an opening located in a position lower than a height of a liquid level that is to be at least ensured in the reserve tank (30); and wherein
the heat transport device further comprises a replenishment quantity calculation unit that calculates a quantity of heat transport medium with which the circulation path unit (10) should be replenished from the reserve tank (30), and
a second control unit configured to open and close the valve (22) in accordance with the quantity of heat transport medium calculated by the replenishment quantity calculation unit in a state in which the pressure in the circulation path unit (10) is lower than the predetermined pressure after the first control unit (40A) opens and closes the valve (22).

2. The heat transport device according to claim 1, **characterized by** further comprising:
a freezing determination unit that determines whether the heat transport medium circulating in the circulation path unit (10) has a possibility of freezing; and
a reduction-in-quantity correction unit that performs a reduction-in-quantity correction in which the quantity of heat transport medium is reduced when an operation start condition is met from an operation stop state if the freezing determination unit determines that the heat transport medium that circulates in the circulation path unit (10) has a possibility of freezing.

3. The heat transport device according to either claim 1 or 2, **characterized in that** the heat transport medium naturally circulates in the circulation path unit (10) while a sequence of receiving heat in a condensed state in the heat recovery unit (11) and radiating heat in a vaporized state in the condensation unit is repeatedly carried out.

4. The heat transport device according to any of claims 1, 2 and 3, **characterized in that** the heat transport device is mounted in a vehicle with an internal combustion engine (50), and the heat recovery unit (11) recovers exhaust heat of the internal combustion engine (50).

## Patentansprüche

1. Wärmetransportvorrichtung (1A), umfassend:
eine Zirkulationspfadeinheit (10), in der eine Wärmerückgewinnungseinheit (11), die ein Wärmetransportmedium verdampft, und eine Kondensationseinheit (12), die das in der Wärmerückgewinnungseinheit (11) verdampfte Wärmetransportmedium kondensiert, eingebaut sind, und die einen Vakuumzustand aufweist;
eine Zweigpfadeinheit (20), die von der Zirkulationspfadeinheit (10) abzweigt und in die ein Ventil (22) eingebaut ist, das in der Lage ist, den Fluss zu steuern; und
eine erste Steuereinheit (40A), die konfiguriert ist, um das Ventil (22) in einem Zustand zu öffnen und zu schließen, in dem der Druck in der Zirkulationspfadeinheit (10) höher als ein vorbestimmter Druck (α) ist, wenn erfasst oder geschätzt wird, dass die Zirkulationspfadeinheit (10) Luft ansaugt, **dadurch gekennzeichnet, dass**
die Wärmetransportvorrichtung ferner einen Reservetank (30) umfasst, der in einer flüssigen Phase ein Wärmetransportmedium speichert, mit dem die Zirkulationspfadeinheit (10) wieder aufgefüllt werden soll, wobei die Zweigpfadeinheit (20) mit dem Reservetank (30) verbunden ist, um eine Öffnung aufzuweisen, die sich in einer Position befindet, die niedriger als eine Höhe eines Flüssigkeitspegels ist, der in dem Reservetank (30) wenigstens gewährleistet werden soll; und wobei
die Wärmetransportvorrichtung ferner eine Nachfüllmengenberechnungseinheit, die eine Menge an Wärmetransportmedium berechnet, mit der die Zirkulationspfadeinheit (10) aus dem Reservetank (30) nachgefüllt werden sollte, und eine zweite Steuereinheit umfasst, die konfiguriert ist, um das Ventil (22) in Übereinstimmung mit der von der Nachfüllmengenberechnungseinheit berechneten Menge an Wärmetransportmedium in einem Zustand zu öffnen und zu schließen, in dem der Druck in der Zirkulationspfadeinheit (10) niedriger ist als der vorbestimmte Druck, nachdem ersten Steuereinheit (40A) das Ventil (22) geöffnet und geschlossen hat.

2. Wärmetransportvorrichtung nach Anspruch 1, **dadurch gekennzeichnet, dass** sie ferner umfasst:
eine Gefrierbestimmungseinheit, die bestimmt, ob das Wärmetransportmedium, das in der Zirkulationspfadeinheit (10) zirkuliert, die Möglichkeit des Einfrierens aufweist; und
eine Reduzierung-in-der-Menge-Korrektureinheit, die eine Reduzierung-in-der-Menge-Korrektur durchführt, bei der die Menge des Wärmetransportmediums reduziert wird, wenn eine Betriebsstartbedingung von einem Betriebsstoppzustand erfüllt ist, wenn die Gefrierbestimmungseinheit bestimmt, dass das Wärmetransportmedium, das in der Zirkulationspfadeinheit (10) zirkuliert, eine Möglichkeit des Einfrierens aufweist.

3. Wärmetransportvorrichtung nach entweder Anspruch 1 oder 2, **dadurch gekennzeichnet, dass** das Wärmetransportmedium auf natürliche Weise in der Zirkulationspfadeinheit (10) zirkuliert, während eine Sequenz des Aufnehmens von Wärme in einem kondensierten Zustand in der Wärmerückgewinnungseinheit (11) und des Abstrahlens von Wärme in einem verdampften Zustand in der Kondensationseinheit wiederholt ausgeführt wird.

4. Wärmetransportvorrichtung nach einem der Ansprüche 1, 2 und 3, **dadurch gekennzeichnet, dass** die Wärmetransportvorrichtung in einem Fahrzeug mit einem Verbrennungsmotor (50) montiert ist und die Wärmerückgewinnungseinheit (11) die Abgaswärme des Verbrennungsmotors (50) rückgewinnt.

## Revendications

1. Dispositif de transport de chaleur (1A) comprenant :
une unité de chemin de circulation (10) dans laquelle une unité de récupération de chaleur (11) qui vaporise un milieu caloporteur et une unité de condensation (12) qui condense le milieu caloporteur vaporisé dans l'unité de récupération de chaleur (11) sont incorporées, et qui a un état de vide ;
une unité de chemin de dérivation (20) qui dérive de l'unité de chemin de circulation (10) et dans laquelle une vanne (22) capable de contrôler le débit est incorporée ; et
une première unité de commande (40A) configurée pour ouvrir et fermer la vanne (22) dans un état dans lequel la pression dans l'unité de chemin de circulation (10) est supérieure à une pression prédéterminée (α) lorsqu'il est détecté ou estimé que l'unité de chemin de circulation (10) aspire de l'air, **caractérisée en ce que** :
le dispositif de transport de chaleur comprend en outre un réservoir de réserve (30) qui stocke, dans une phase liquide, le milieu caloporteur avec lequel l'unité de chemin de circulation (10) doit être remplie, l'unité de chemin de dérivation (20) étant connectée au réservoir de réserve (30) de manière à avoir une ouverture située dans une position inférieure à une hauteur d'un niveau de liquide qui doit être au moins assurée dans le réservoir de réserve (30) ; et dans lequel le dispositif de transport de chaleur comprend en outre une unité de calcul de quantité de remplissage qui calcule une quantité de milieu caloporteur avec laquelle l'unité de chemin de circulation (10) doit être remplie à partir du réservoir de réserve (30), et
une seconde unité de commande configurée pour ouvrir et fermer la vanne (22) conformément à la quantité de milieu caloporteur calculée par l'unité de calcul de quantité de remplissage dans un état dans lequel la pression dans l'unité de chemin de circulation (10) est inférieure à la pression prédéterminée après que la première unité de commande (40A) ouvre et ferme la vanne (22).

2. Dispositif de transport de chaleur selon la revendication 1, **caractérisé en ce qu'**il comprend en outre :
une unité de détermination de congélation qui détermine si le milieu caloporteur circulant dans l'unité de chemin de circulation (10) a une possibilité de congélation ; et
une unité de correction de réduction de quantité qui effectue une correction de réduction de quantité dans laquelle la quantité de milieu caloporteur est réduite lorsqu'une condition de début de fonctionnement est remplie à partir d'un état d'arrêt de fonctionnement si l'unité de détermination de congélation détermine que le milieu caloporteur qui circule dans l'unité de chemin de circulation (10) a une possibilité de congélation.

3. Dispositif de transport de chaleur selon la revendication 1 ou 2, **caractérisé en ce que** le milieu caloporteur circule naturellement dans l'unité de chemin de circulation (10) tandis qu'une séquence de réception de chaleur à l'état condensé dans l'unité de récupération de chaleur (11) et la chaleur rayonnante à l'état vaporisé dans l'unité de condensation est effectuée de manière répétitive.

4. Dispositif de transport de chaleur selon l'une quelconque des revendications 1, 2 et 3, **caractérisé en ce que** le dispositif de transport de chaleur est monté dans un véhicule à moteur à combustion interne (50), et l'unité de récupération de chaleur (11) récupère la chaleur d'échappement du moteur à combustion interne (50).
